# EUROPEAN PATENT APPLICATION

(11) **EP 2 685 411 A1**
(43) Date of publication of application: **15.01.2014**
(21) Application number: 12848983.8
(22) Date of filing: 13.11.2012
(51) Int. Cl.: G06Q 20/06

(54) **MOBILE TERMINAL, ELECTRONIC MONEY USAGE RESTRICTION SYSTEM, AND RECORDING MEDIUM**

(30) Priority: 14.11.2011 JP 2011248793
(71) Applicant: NTT DOCOMO, INC., Chiyoda-Ku Tokyo 100-6150 (JP)
(72) Inventor: YOSHIKAWA, Kunio, Tokyo 100-6150 (JP); AKIYAMA, Tomohiro, Tokyo 100-6150 (JP); TANNO, Tetsuhiro, Tokyo 100-6150 (JP); SASAGAWA, Tetsuhiro, Tokyo 100-6150 (JP); YAMAGUCHI, Kumiko, Tokyo 100-6150 (JP)
(74) Representative: MERH-IP Matias Erny Reichl Hoffmann
(86) International application number: PCT/JP2012/079357
(87) International publication number: WO 2013/073520

(57) **Abstract**

A portable terminal is resistant to falsification of the spending limit of user's electronic money. The portable terminal includes a spending limit storage unit that stores the spending limit of electronic currency that can be spent; a network interface that receives, through a network, spending limit update information generated by a card server according to a notice from a parent user; a spending limit update unit that, when the spending limit update information is received, updates the spending limit stored in the spending limit storage unit, according to the received spending limit update information; a near field communication interface that detects carrier waves output from a reader/writer; and a secure element unit that applies for purchase when the carrier waves are detected. After the secure element unit applies for purchase, the spending limit update unit receives, from the card server, a spending limit based on whether the card server allows payment for the applied purchase and updates the spending limit stored in the spending limit storage unit according to the received spending limit.

## Description

### TECHNICAL FIELD

The present invention relates to a portable terminal which restricts the use of electronic currency (electronic money) in near field communication, an electronic currency usage restriction system in which the portable terminal is used, and a recording medium on which a program for operating the portable terminal is recorded.

### BACKGROUND ART

Recently prevailing electronic currency services allow payments to be made and funds to be added (monetary value to be transferred from a bank account to electronic money) by combining a near field communication chip-embedded card and a portable terminal. Some electronic currency services using a combination of the near field communication chip-embedded card and the portable terminal allow the user to load the portable terminal online with electronic money if the user inputs a predetermined secret code number, which is said to weaken the sense of value of money. If the user of an electronic currency service combining the near field communication chip-embedded card and the portable terminal is a minor and if the underage user knows the secret code number needed to transfer funds from his or her guardian's bank account, the underage user could transfer funds from the guardian's bank account without the guardian's wishes, which could raise problems such as spending electronic money against the guardian's wishes. In light of these problems, a portable terminal device in Patent literature 1 includes a near field communication chip-embedded card processing unit which provides an electronic money function, and has a use permission information storage means which stores and manages restricted use permission information for permitting conditional payments by electronic money, a first control means for switching the electronic money function from the disabled state to the enabled state when a message from a registered sender is detected, and a second control means which references the restricted use permission information after the electronic money function state has been switched to the enabled state, permits payments by electronic money up to a specified limit and, if the limit is exceeded, switches the electronic money function from the enabled state to the disabled state.

According to the portable terminal device in Patent literature 1, when a message from the registered sender is detected, the electronic money function is switched from the disabled state to the enabled state, references the restricted use permission information, permits payments by electronic money up to the specified limit, and if the limit is exceeded, switches the electronic money function from the enabled state to the disabled state. Accordingly, in a normal state, in which payments by electronic money are inhibited, the payment inhibited state can be remotely cancelled by a message received from the registered sender; even if payments by electronic money are permitted by the cancellation, the payments can be limited within a specified range, and if the specified range is exceeded, the normal disabled state can be restored. By allowing conditional payments by electronic money, parents can effectively prevent their children from overspending electronic money under their control, for example.

### PRIOR ART LITERATURE

Patent literature 1: Japanese Patent Application Laid Open No. 2006-209453

### SUMMARY OF THE INVENTION

### PROBLEMS TO BE SOLVED BY THE INVENTION

The electronic money function of the portable terminal device in Patent literature 1 stores a spending limit in a memory unit, makes payments unless a billed amount exceeds the spending limit, subtracts the billed amount from the spending limit and sets the balance as a new spending limit, and rejects payments if a billed amount exceeds the spending limit. This can prevent the user from spending electronic money beyond the spending limit. The portable terminal device of Patent literature 1, however, has a problem in that, if the spending limit stored in the memory unit is falsified, electronic money could be spent exceeding the proper spending limit.

An object of the present invention is to provide a portable terminal that rejects spending exceeding a proper spending limit of electronic money that can be spent on a user's portable terminal even if the spending limit is falsified and to provide an electronic currency usage restriction system using this portable terminal.

### MEANS TO SOLVE THE PROBLEMS

According to a first aspect of the present invention, a portable terminal that can communicate in a near field communication manner with a reader/writer which can be connected through a network to a card server which executes payment with electronic currency; that can communicate with the card server through the network; and that is used by a child user is provided. The portable terminal includes:
a spending limit storage unit adapted to store an upper limit of electronic currency that can be spent, hereafter called a spending limit;
a network interface adapted to receive, through the network, spending limit update information generated by the card server according to a notice from a parent user;
a spending limit update unit adapted, when the spending limit update information is received, to update the spending limit stored in the spending limit storage unit, according to the received spending limit update information;
a near field communication interface adapted to detect carrier waves output from the reader/writer; and
a secure element unit adapted to apply for purchase when the carrier waves are detected.

After the secure element unit applies for purchase, the spending limit update unit receives, from the card server, a spending limit based on whether the card server allows payment for the applied purchase and updates the spending limit stored in the spending limit storage unit according to the received spending limit.

According to a second aspect of the present invention, an electronic currency usage restriction system includes a card server that executes payment with electronic currency; a reader/writer that can be connected through a network to the card server; a portable terminal that is owned by a parent user and that can be connected through the network to the card server, hereafter called a parent-user portable terminal; and a portable terminal that is owned by a child user, that can communicate in a near field communication manner with the reader/writer, and that can be connected through the network to the card server, hereafter called a child-user portable terminal.

The parent-user portable terminal includes:
a spending limit setting unit adapted to generate spending limit setting information indicating an upper limit of electronic currency that can be spent, hereafter called a spending limit, according to an input from the parent user; and
a network interface adapted to send the spending limit setting information to the card server;
the child-user portable terminal includes:
a spending limit storage unit adapted to store the spending limit;
a network interface adapted to receive spending limit update information generated by the card server according to the spending limit setting information;
a spending limit update unit adapted to update the spending limit stored in the spending limit storage unit, according to the received spending limit update information;
a near field communication interface adapted to detect carrier waves output from the reader/writer; and
a secure element unit adapted to apply for purchase when the carrier waves are detected; and
the card server includes:
a spending limit storage unit adapted to store the spending limit;
a network interface adapted to receive the spending limit setting information from the parent-user portable terminal and to send the spending limit update information to the child-user portable terminal;
a right confirmation unit adapted to confirm that the parent-user portable terminal, which sent the spending limit setting information, has a right to set the spending limit, to generate the spending limit update information according to the received spending limit setting information; and to store the spending limit in the spending limit storage unit;
a spending limit update unit adapted to generate the spending limit update information according to the spending limit setting information received from the parent-user portable terminal, and to update the spending limit stored in the spending limit storage unit;
a payment processing unit adapted, when a payment request that includes a purchase amount is received from the reader/writer, to determine whether the purchase amount is smaller than or equal to the stored spending limit; and
a spending limit update unit adapted, when the payment processing unit determines that the purchase amount is smaller than or equal to the stored spending limit, to update the stored spending limit to the difference between the stored spending limit and the purchase amount, as a new spending limit, to generate spending limit update information indicating the updated spending limit or the spending limit not updated when the purchase amount is not smaller than or equal to the stored spending limit, and to send the spending limit update information to the child-user portable terminal by the use of the network interface.

The spending limit update unit of the child-user portable terminal updates the spending limit stored in the spending limit storage unit according to the spending limit based on the spending limit update information received from the card server after the purchase is applied for.

### EFFECTS OF THE INVENTION

According to the present invention, it is possible to implement a portable terminal that will not be affected by falsification of a user's spending limit of electronic money.

### BRIEF DESCRIPTION OF THE DRAWINGS

Fig. 1A is a view illustrating, in outline, an electronic currency usage restriction system according to a first embodiment;
Fig. 1B is a view illustrating, in outline, electronic currency usage restriction systems according to second, third, and fourth embodiments;
Fig. 2 is a block diagram showing the configuration of a portable terminal in the electronic currency usage restriction system of the first embodiment;
Fig. 3 is a block diagram showing the configuration of card servers in the electronic currency usage restriction system of the first embodiment;
Fig. 4 is a sequence diagram illustrating the operation of the electronic currency usage restriction system of the first embodiment;
Fig. 5 is a block diagram showing the configuration of a portable terminal in the electronic currency usage restriction system of the second embodiment;
Fig. 6 is a block diagram showing the configurations of servers in the electronic currency usage restriction system of the second embodiment;
Fig. 7 is a sequence diagram illustrating the operation of the electronic currency usage restriction system of the second embodiment;
Fig. 8 is a block diagram showing the configuration of a portable terminal in the electronic currency usage restriction system of the third embodiment;
Fig. 9 is a block diagram showing the configurations of servers in the electronic currency usage restriction system of the third embodiment;
Fig. 10 is a sequence diagram illustrating the operation of the electronic currency usage restriction system of the third embodiment;
Fig. 11 is a block diagram showing the configuration of a portable terminal in the electronic currency usage restriction system of the fourth embodiment;
Fig. 12 is a block diagram showing the configurations of servers in the electronic currency usage restriction system of the fourth embodiment;
Fig. 13 is a sequence diagram illustrating the operation of the electronic currency usage restriction system of the fourth embodiment.

### BEST MODES FOR CARRYING OUT THE INVENTION

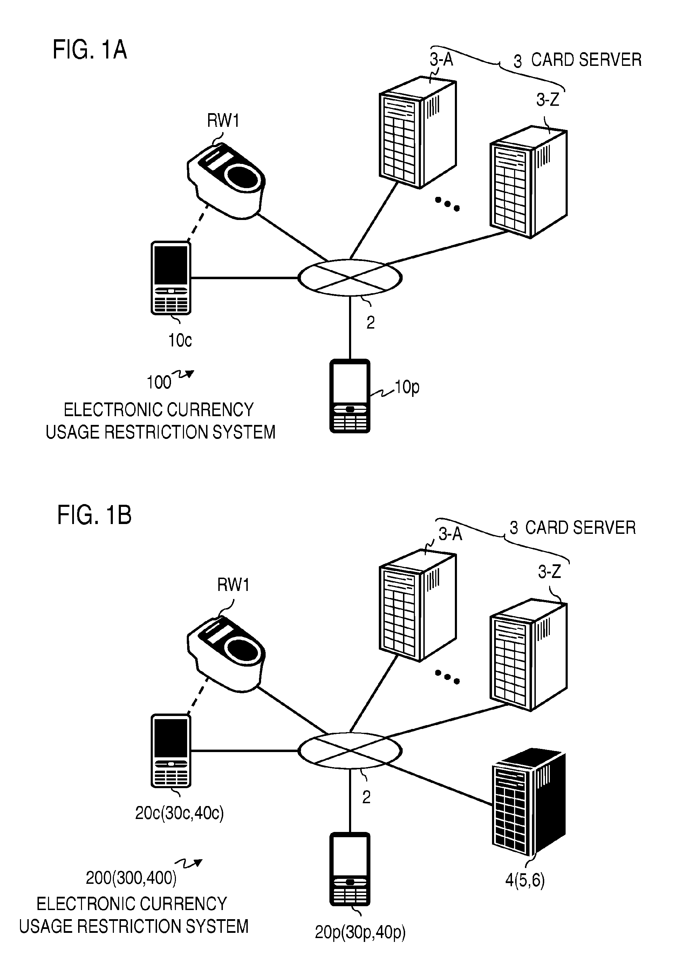

Now, embodiments of the present invention will be described in detail. Components having identical functions will be denoted by the same reference numerals, and a redundant description of those components will be omitted. First, electronic currency usage restriction systems according to all the embodiments of the present invention will be outlined with reference to Figs. 1A and 1B. Fig. 1A is a view illustrating, in outline, an electronic currency usage restriction system 100 according to a first embodiment. Fig. 1B is a view illustrating, in outline, electronic currency usage restriction systems 200, 300, and 400 according to second, third, and fourth embodiments. In the following description and drawings, an ordinal number in parentheses following an ordinal embodiment number represents a different ordinal embodiment number, and a numeral in parentheses following a reference numeral given to a component in an embodiment represents the reference numeral of the corresponding component in a different embodiment. The electronic currency usage restriction system 100 according to the first embodiment includes a reader/writer RW1, portable terminals 10c and 10p, and a card server 3, and they can communicate with one another through a network 2. A given one of the portable terminals 10c and 10p (20c and 20p, 30c and 30p, 40c and 40p) may be denoted below by a reference numeral 10 (20, 30, 40). The reader/writer RW1 and the portable terminals 10c and 10p can perform near field communication (broken line in the drawing).

In Fig. 1B, the electronic currency usage restriction system 200 (300, 400) according to the second (third, fourth) embodiment includes a reader/writer RW1, portable terminals 20c and 20p (30c and 30p, 40c and 40p), a card server 3, and a limit-information management server 4 (5, 6), and they can communicate with one another through a network 2, as in the first embodiment. As in the first embodiment, the reader/writer RW1 and the portable terminals 20c and 20p (30c and 30p, 40c and 40p) can perform near field communication (broken line in the drawing). In all the embodiments, the following case will be described: the portable terminals 10c and 10p (20c and 20p, 30c and 30p, 40c and 40p) are indicated; the users of these two portable terminals are in a parent-child relationship; and controls on the spending of electronic money are set from the portable terminal 10p (20p, 30p, 40p) owned by the parent (parent user) to the portable terminal 10c (20c, 30c, 40c) owned by the child (child user). In this description, the portable terminal owned by the parent is expressed as the portable terminal 10p (20p, 30p, 40p), and the portable terminal owned by the child is expressed as the portable terminal 10c (20c, 30c, 40c), but the portable terminal of the parent user and the portable terminal of the child user have the same functional configurations. Accordingly, if an explanation applies to both portable terminals, or if no confusion will be brought about, the portable terminals may be denoted simply by a reference numeral 10 (20, 30, 40). In this description, the card server 3 means a server which executes payments by electronic currency. The card server 3 may include just a single card server; in the embodiments in this description, however, the card server 3 includes a given number of card servers (a card server A (3-A) to a card server Z (3-Z)), and there are as many card servers as types of electronic money services. The limit-information management server 4 (5, 6) is a server that manages limit information, or information concerning user-specified controls on the spending of electronic money, and will be described in detail in the second, third, and fourth embodiments.

### [First Embodiment]

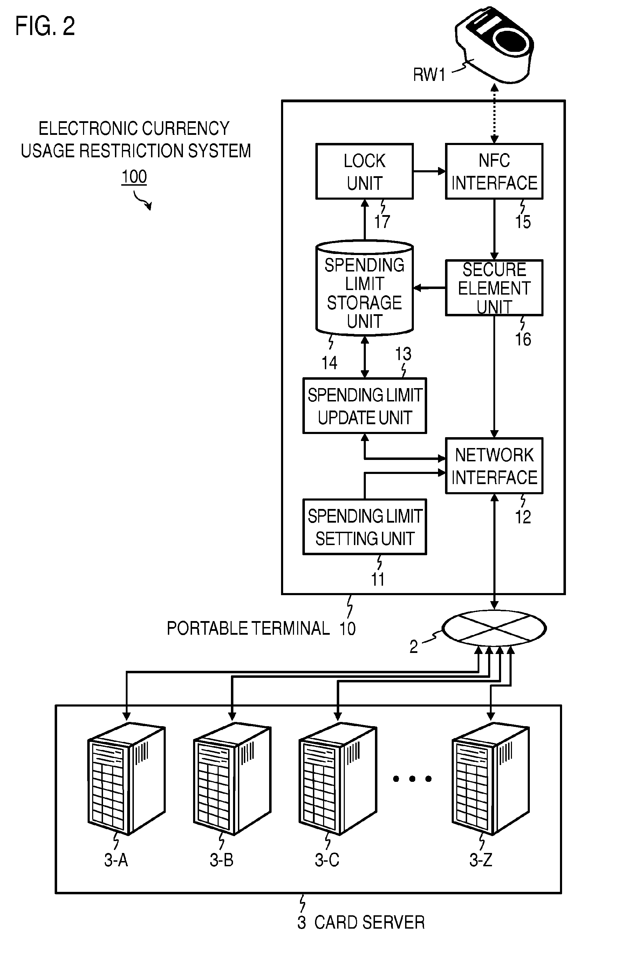

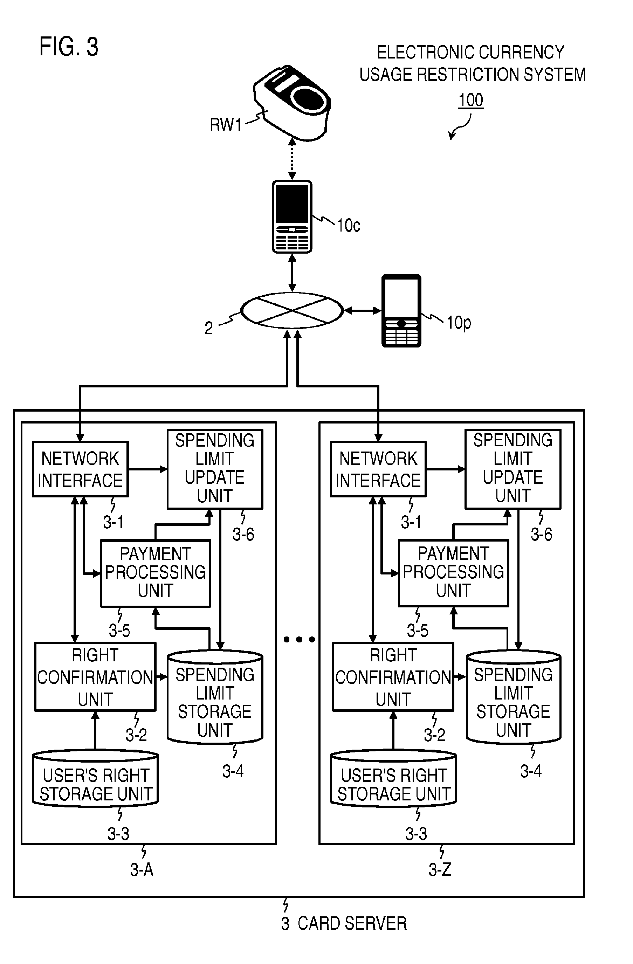

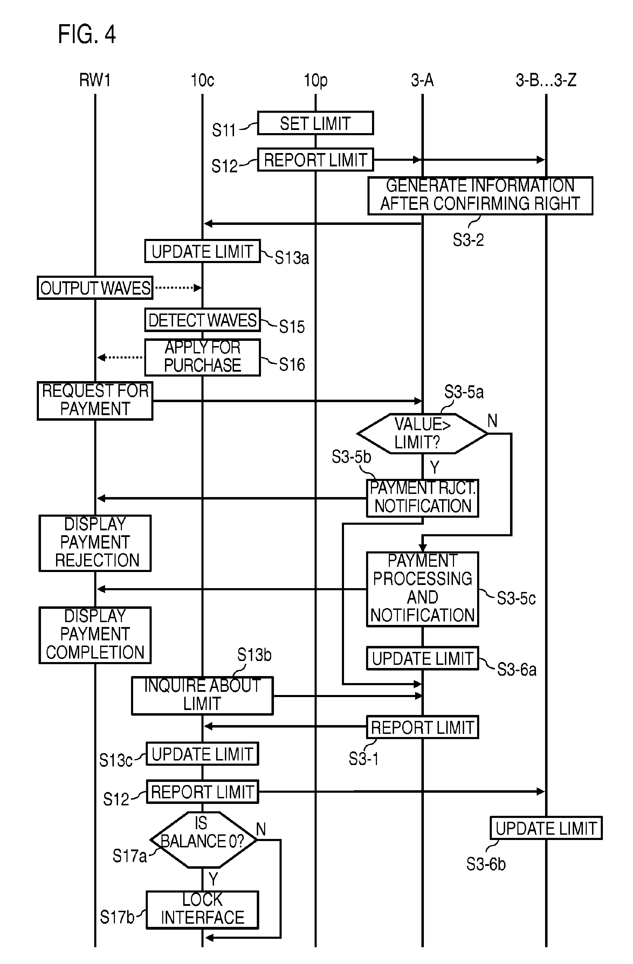

Next, the electronic currency usage restriction system 100 according to the first embodiment will be described in detail with reference to Figs. 2, 3, and 4. Fig. 2 is a block diagram showing the configuration of given portable terminals 10c and 10p in the electronic currency usage restriction system 100 in this embodiment. Fig. 3 is a block diagram showing the configuration of the card server 3 in the electronic currency usage restriction system 100 in this embodiment. Fig. 4 is a sequence diagram illustrating the operation of the electronic currency usage restriction system 100 in this embodiment. As shown in Fig. 2, the portable terminal 10 included in the electronic currency usage restriction system 100 in this embodiment includes a spending limit setting unit 11, a network interface 12, a spending limit update unit 13, a spending limit storage unit 14, a near field communication interface 15, a secure element unit 16, and a lock unit 17. The spending limit storage unit 14 is a storage unit that stores the upper limit of electronic money that can be spent (spending limit).

As shown in Fig. 3, the card server 3 included in the electronic currency usage restriction system 100 in this embodiment includes a plurality of card servers, that is, a card server A to a card server Z, each including a network interface 3-1, a right confirmation unit 3-2, a user's right storage unit 3-3, a spending limit storage unit 3-4, a payment processing unit 3-5, and a spending limit update unit 3-6. As described earlier, in the case described below, a pair of portable terminals 10 are provided; the users of the two portable terminals are in a parent-child relationship; and controls on the spending of electronic money are set from the portable terminal 10p owned by the parent to the portable terminal 10c owned by the child.

The parent, that is, the user of the portable terminal 10p, operates the portable terminal 10p and inputs the upper limit of electronic money to be spent (spending limit) by the child user into the portable terminal 10p. The parent user can enter the spending limit by using a special application installed beforehand on the portable terminal 10p or by sending e-mail to a specified address. For example, a spending limit of 2,000 yen can be set. The spending limit setting unit 11 of the portable terminal 10p generates spending limit setting information that includes the spending limit (2,000 yen, for example) and identification information specifying the target portable terminal 10c on which the spending limit is set, in accordance with the user input made by the parent user (S11). When the spending limit setting information is generated, the network interface 12 of the portable terminal 10p sends the generated spending limit setting information to the card server 3 (S12). If the card server 3 includes a plurality of card servers (a card server A (3-A) to a card server Z (3-Z)), as shown in the figure, it should be noted that the network interface 12 of the portable terminal 10p sends the spending limit setting information to all the card servers.

The network interface 3-1 of the card server 3 receives the spending limit setting information. When the network interface 3-1 receives the spending limit setting information, the right confirmation unit 3-2 of the card server 3 checks whether the portable terminal 10p that has sent the spending limit setting information has the right to set the spending limit and, if the portable terminal 10p that has sent the spending limit setting information has the right to make the setting, generates spending limit update information according to the received spending limit setting information (S3-2). The spending limit setting information is stored in the spending limit storage unit 3-4 of the card server 3 in a form that can be referenced at payment. The right to specify a user's spending limit can be confirmed, for example, by storing a table for managing information indicating whether the user who has sent the spending limit setting information and the user of the target terminal have a family connection in the user's right storage unit 3-3 and by referencing the terminal identification numbers or the like of the portable terminal 10 which has sent the spending limit setting information and the target portable terminal 10 to the table. Whether the users have a family connection or not can be determined from information indicating the use of a family plan service or the like. Since the parent user is going to set a spending limit of electronic money to be spent by the child user in this embodiment, the portable terminal 10p of the parent user has a proper right for setting a spending limit in the portable terminal 10c of the child user. Steps after the card server 3 recognizes that the portable terminal 10p has such a right will be described next. In this case, the network interface 3-1 of the card server 3 sends the spending limit update information generated by the right confirmation unit 3-2 to the target portable terminal 10c.

The network interface 12 of the portable terminal 10c receives the spending limit update information generated by the card server 3. When the network interface 12 receives the spending limit update information, the spending limit update unit 13 of the portable terminal 10c updates the spending limit stored in the spending limit storage unit 14 in accordance with the received spending limit update information (S13a). With the steps described above, the spending limit setting process finishes. As described earlier, the spending limit input to the portable terminal 10p by the parent user is sent through the network 2 to the card server 3 and the portable terminal 10c of the child user, thereby allowing sharing of information on the spending limit. If the card server 3 includes a plurality of card servers (a card server A (3-A) to a card server Z (3-Z)), the spending limit setting information is sent to all the card servers, and all the card servers included in the card server 3 can share the information on the spending limit.

The description of the scene in which the child user uses electronic money after the parent user sets a spending limit will continue. When the child user wants to make a payment by using his or her own portable terminal 10c, the user holds the chip of the portable terminal 10c over the reader/writer RW1 provided for a shop or the like. The reader/writer RW1 outputs carrier waves. The near field communication interface 15 of the portable terminal 10c detects the carrier waves output from the reader/writer RW1 (S15). When the carrier waves are detected, the secure element unit 16 of the portable terminal 10c applies for purchase (S16). This operation of the secure element unit 16 is expressed here just as an application for purchase and will not be described in detail, but the secure element unit 16 actually encrypts contents of communication with the reader/writer RW1, key management, and the like. The reader/writer RW1 receives the purchase application from the portable terminal 10c and sends a payment request that includes the purchase amount and the identification information of the portable terminal, to the card server 3. Suppose here that the card server 3 includes a plurality of card servers (a card server A (3-A) to a card server Z (3-Z)) and that the child user is going to make a payment by using the card server A (3-A). Therefore, the reader/writer RW1 will make a payment request to the card server A (3-A). The network interface 3-1 of the card server A (3-A) receives the payment request from the reader/writer RW1. When the network interface 3-1 receives the payment request, the payment processing unit 3-5 of the card server A (3-A) compares the purchase amount reported in the payment request, that is, the payment value, and the spending limit stored in the spending limit storage unit 3-4 (S3-5a) and, if the payment value exceeds the spending limit, sends a payment rejection notification to the reader/writer RW1 (S3-5b). The reader/writer RW1 receives the payment rejection notification and displays the payment rejection. If the payment value falls below the spending limit, payment processing is performed, and a payment completion notification is supplied to the reader/writer RW1 (S3-5c). The reader/writer RW1 receives the payment completion notification and displays the payment completion. The spending limit update unit 3-6 of the card server A (3-A) updates the spending limit stored in the spending limit storage unit 3-4 to a new spending limit, which is the difference between the initial spending limit and the payment value (S3-6a).

The portable terminal 10c queries of the card server A (3-A), to which the payment is requested, about the spending limit updated after the payment or, if the payment is rejected, the non-updated spending limit (S13b). The card server 3-A reports the spending limit updated after the payment or, if the payment is rejected, the non-updated spending limit, as the spending limit update information to the portable terminal 10c of the child user (S3-1). The spending limit update unit 13 of the portable terminal 10c of the child user updates the spending limit stored in the spending limit storage unit 14 in accordance with the spending limit indicated by the spending limit update information obtained from the card server 3-A (S13c). The network interface 12 of the portable terminal 10c further sends the information indicating the new spending limit (spending limit setting information) to all the other card servers 3-B to 3-Z, which did not executed the payment (S12). It is checked whether the update of the spending limit has brought the balance to zero (S 17a): If the balance has become zero, the lock unit 17 locks the near field communication interface 15 (S 17b) to disable subsequent payments by electronic money; if the update of the spending limit has not brought the balance to zero, the lock unit 17 is not activated.

The network interfaces 3-1 of the card servers 3-B to 3-Z, which did not executed the payment, receive the new spending limit from the portable terminal 10c. When the network interfaces 3-1 receive the new spending limit, the spending limit update units 3-6 of the card servers 3-B to 3-Z, which did not executed the payment, update the spending limit stored in the spending limit storage units 3-4 to the new spending limit (S3-6b). Here, the steps in which electronic money is used by the portable terminal 10c finish.

As described above, in the electronic currency usage restriction system 100 in this embodiment, the card server 3 determines whether the payment is accepted or rejected in accordance with the spending limit stored beforehand in the spending limit storage unit 3-4, and it would be difficult to falsify the spending limit in the card server 3. If the spending limit recorded in the spending limit storage unit 14 of the portable terminal 10c of the child user is falsified to a larger value, the card server 3 determines whether the payment is possible or not in accordance with the spending limit, and payments exceeding the proper spending limit will not be made. The falsified spending limit is updated to the proper spending limit received from the card server 3 in step S13c. If the card server 3 includes as many servers as types of electronic money services, the spending limit update unit 13 of the portable terminal 10 updates the spending limit stored in the spending limit storage unit 14 to a new spending limit (balance) each time a payment is made, the newly updated spending limit is reported through the network interface 12 to the card servers that did not execute the payment, and all the card servers share the information of the new spending limit (balance). Therefore, even if the user of the portable terminal on which the spending limit is set uses a plurality of electronic money services, the user cannot spend money exceeding the initially specified spending limit, and the user's spending of electronic money can be restricted appropriately.

### [Second Embodiment]

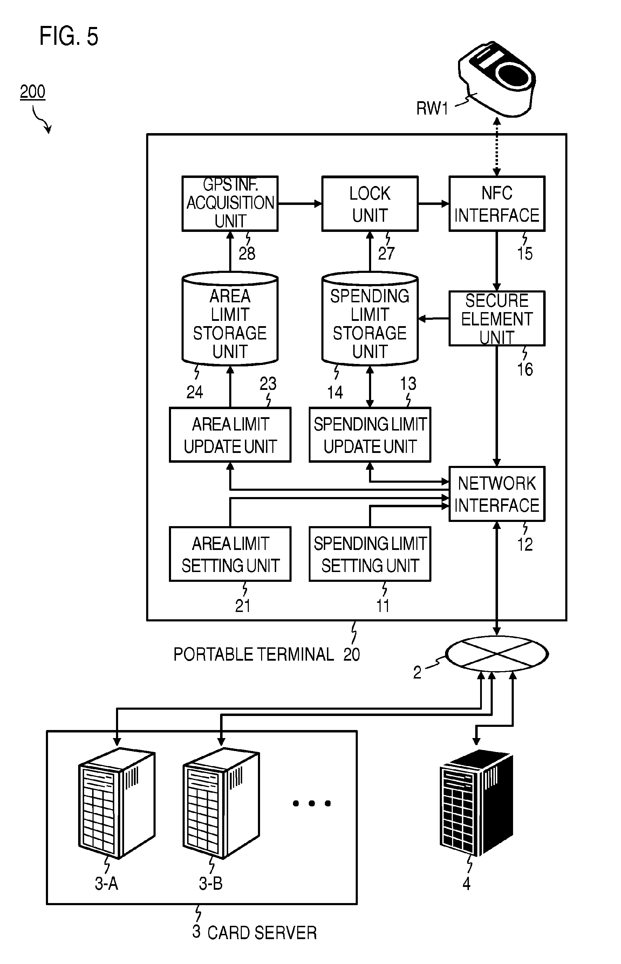

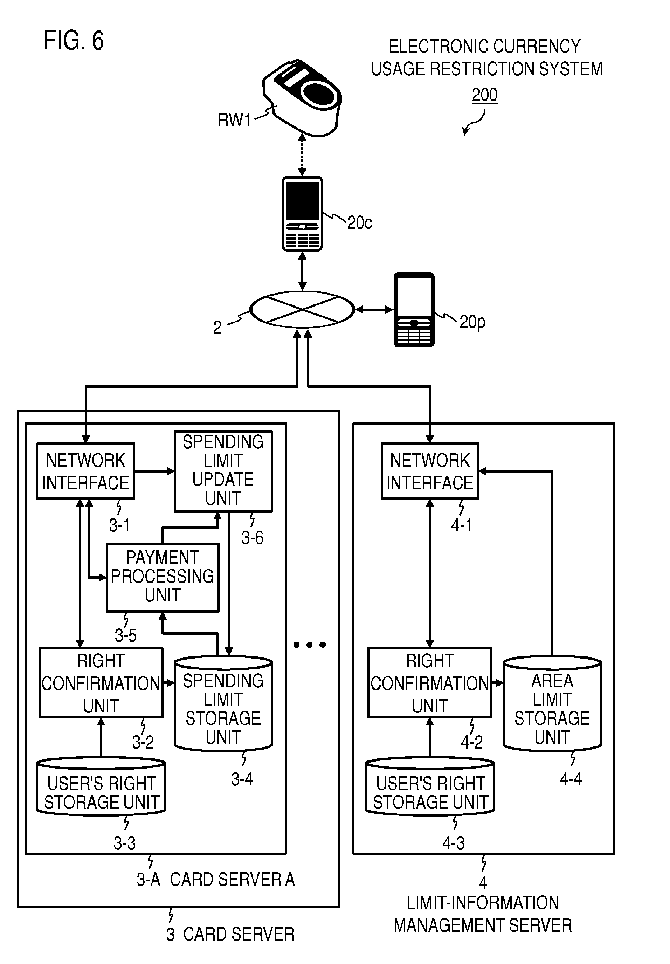

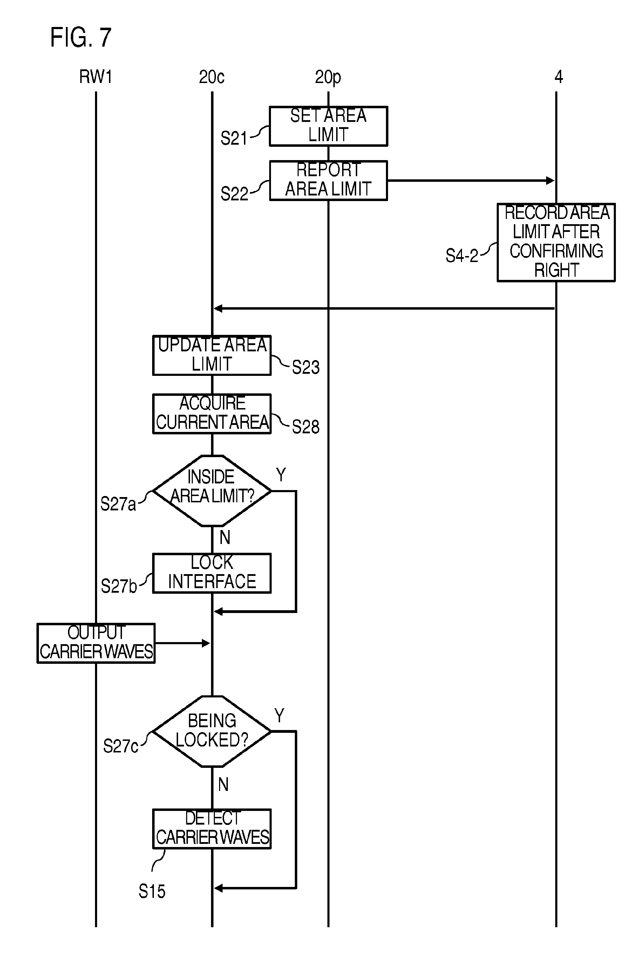

Next, an electronic currency usage restriction system 200 according to a second embodiment, which differs from the electronic currency usage restriction system 100 in the first embodiment in that a function to specify an area in which the use of electronic currency is permitted is added, will be described in detail with reference to Figs. 5, 6, and 7. Fig. 5 is a block diagram showing the configuration of a portable terminal 20 in the electronic currency usage restriction system 200 in this embodiment. Fig. 6 is a block diagram showing the configurations of servers in the electronic currency usage restriction system 200 in this embodiment. Fig. 7 is a sequence diagram illustrating the operation of the electronic currency usage restriction system 200 in this embodiment.

As shown in Fig. 5, the portable terminal 20 in the electronic currency usage restriction system 200 in this embodiment includes a spending limit setting unit 11, a network interface 12, a spending limit update unit 13, a spending limit storage unit 14, a near field communication interface 15, a secure element unit 16, a lock unit 27, an area limit setting unit 21, an area limit update unit 23, an area limit storage unit 24, and a GPS information acquisition unit 28. The portable terminal 20 in the second embodiment differs from the portable terminal 10 in the first embodiment in the following points: The portable terminal 20 in this embodiment includes the lock unit 27 in place of the lock unit 17 included in the portable terminal 10 in the first embodiment; the portable terminal 20 in this embodiment includes the area limit setting unit 21, the area limit update unit 23, the area limit storage unit 24, and the GPS information acquisition unit 28, which are not included in the portable terminal 10 in the first embodiment.

As shown in Fig. 6, the card server 3 included in the electronic currency usage restriction system 200 in this embodiment includes a plurality of servers, a card server A to a card server Z, each including a network interface 3-1, a right confirmation unit 3-2, a user's right storage unit 3-3, a spending limit storage unit 3-4, a payment processing unit 3-5, and a spending limit update unit 3-6, the configuration being the same as the card server 3 in the first embodiment shown in Fig. 3. The electronic currency usage restriction system 200 in this embodiment includes a limit-information management server 4, which is not included in the electronic currency usage restriction system 100 in the first embodiment. The limit-information management server 4 included in the electronic currency usage restriction system 200 in this embodiment includes a network interface 4-1, a right confirmation unit 4-2, a user's right storage unit 4-3, and an area limit storage unit 4-4. Just one limit-information management server 4 will be enough, and one of the plurality of card servers included in the card server 3 may serve concurrently as the limit-information management server 4. The difference from the first embodiment will be described next, and components denoted by the same reference numerals perform the same operations as in the first embodiment, and a description of those components will be omitted.

As described earlier, in the case described below, a pair of portable terminals 20 are provided; the users of the two portable terminals are in a parent-child relationship; and controls on the spending of electronic money are set from the portable terminal 20p owned by the parent to the portable terminal 20c owned by the child. In the case described in this embodiment, the parent user restricts the amount of electronic money the child user can spend by setting a spending limit on the portable terminal 20c, as in the first embodiment, and also restricts the area in which the child user can use electronic money by setting an area in which electric currency can be used (area limit) on the portable terminal 20c.

The spending limit is set in the same process as described in the first embodiment, and a description thereof will be omitted. The setting of the area limit will be described next. The parent user operates the portable terminal 20p and inputs the area in which the child user can use electronic money (area limit) into the portable terminal 20p. The parent can input the area limit by using a special application installed beforehand on the portable terminal 20p or by sending e-mail to a specified address. The area limit can be set as "in Tokyo Metropolis," for example, or can be set on a more localized area such as "in Musashino City" or "in Setagaya Ward" in Tokyo Metropolis. The area information may be specified by an area code of the telephone number. The area limit setting unit 21 of the portable terminal 20p generates area limit setting information indicating the area limit (such as "in Musashino City," or "042" using an area code) in accordance with the input by the parent user (S21). When the area limit setting information is generated, the network interface 12 of the portable terminal 20p sends the generated area limit setting information to the limit-information management server 4 (S22).

The network interface 4-1 of the limit-information management server 4 receives the area limit setting information. When the network interface 4-1 receives the area limit setting information, the right confirmation unit 4-2 of the limit-information management server 4 confirms whether the portable terminal 20 which has sent the area limit setting information has the right to specify the area limit and, if the portable terminal 20 which has sent the area limit setting information has such a setting right, generates area limit update information in accordance with the received area limit setting information (S4-2). The area limit setting information is stored in the area limit storage unit 4-4 of the limit-information management server 4. The user's right to set an area limit can be confirmed by storing in the user's right storage unit 4-3 a table for managing information indicating whether the user who has sent the area limit setting information and the target user have a family connection and by referencing the terminal identification numbers or the like of the portable terminal 20 which has sent the area limit setting information and the target portable terminal 20 to the table, for example. In this embodiment, the portable terminal 20p of the parent user has a proper right for setting an area limit in the portable terminal 20c of the child user, as in the first embodiment. Steps after the limit-information management server 4 recognizes that the portable terminal 20p has such a right will be described next. In that case, the network interface 4-1 of the limit-information management server 4 sends the area limit update information generated by the right confirmation unit 4-2 to the target portable terminal 20c.

The network interface 12 of the portable terminal 20c receives the area limit update information generated by the limit-information management server 4. When the network interface 12 receives the area limit update information, the area limit update unit 23 of the portable terminal 20c updates the area limit stored in the area limit storage unit 24 in accordance with the received area limit update information (S23). With those steps, the area limit setting process finishes. A series of steps S21, S22, S4-2, and S23 may be performed before, after, or in parallel with a series of steps S11, S12, S3-2, and S13a in Fig. 4.

The determination of whether the child user is in the area limit will be described next. The GPS information acquisition unit 28 of the portable terminal 20c acquires the current position of the portable terminal 20c at a timing when the area limit is updated or at regular intervals (S28). The lock unit 27 compares the acquired current position with the area limit stored in the area limit storage unit 24 (S27a) and, if the acquired current position is determined to be outside the area limit stored in the area limit storage unit 24, locks the near field communication interface 15 (S27b) and prevents payments by electronic money. If the acquired current position is determined to be within the area limit stored in the area limit storage unit 24, the lock unit 27 is not activated. Like the lock unit 17 in the first embodiment, the lock unit 27 may also have a function to lock the near field communication interface 15 when the balance stored in the spending limit storage unit 14 becomes 0.

The description of the scene in which the child user uses electronic money after the parent user specifies the area limit will continue. When the child user wants to make a payment by using his or her own portable terminal 20c, the user makes the chip of his or her own portable terminal 20c approach the reader/writer RW1 provided for a shop or the like. The reader/writer RW1 outputs carrier waves. The near field communication interface 15 of the portable terminal 20c checks whether it is locked by the lock unit 27 (S27c): If locked, it cannot work; if it is not locked by the lock unit 27, the near field communication interface 15 of the portable terminal 20c detects the carrier waves output from the reader/writer RW1 (S15). The steps after the carrier waves are detected in step S15 are the same as step S15 and subsequent steps in the first embodiment, and a description of those steps will be omitted.

As described above, in addition to the same advantages as the first embodiment, the electronic currency usage restriction system 200 in this embodiment can prevent the spending of electronic money from a portable terminal 20 on which the area limit is set when the portable terminal 20 is outside the area limit, by storing information on the area limit to be shared through the limit-information management server 4 in the area limit storage unit 24 of the portable terminal 20, having the GPS information acquisition unit 28 compare the information with its current position, and having the lock unit 27 lock the near field communication interface 15 in accordance with the result of the comparison. Therefore, the user's spending of electronic money can be restricted appropriately.

### [Third Embodiment]

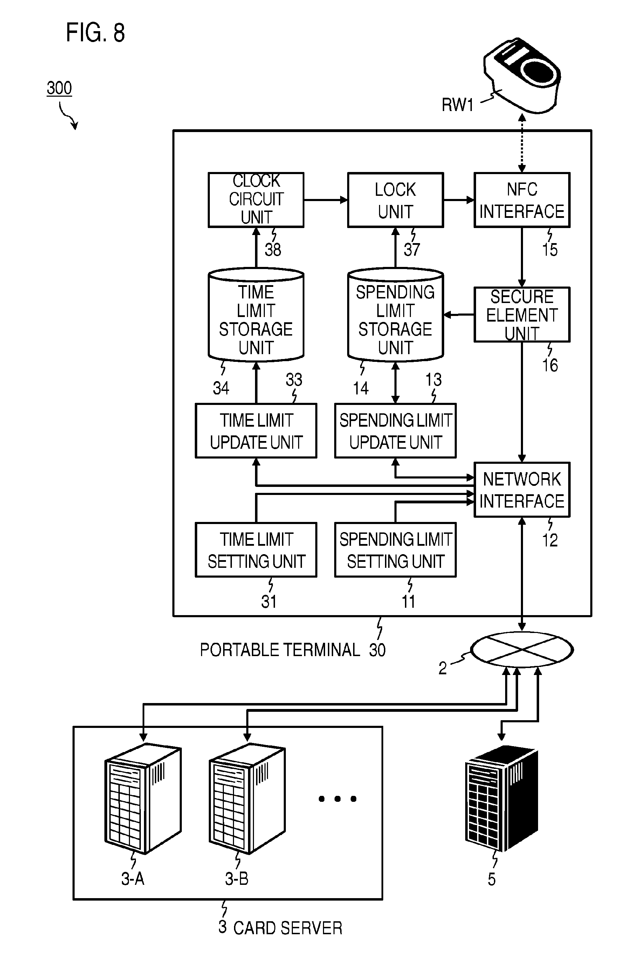

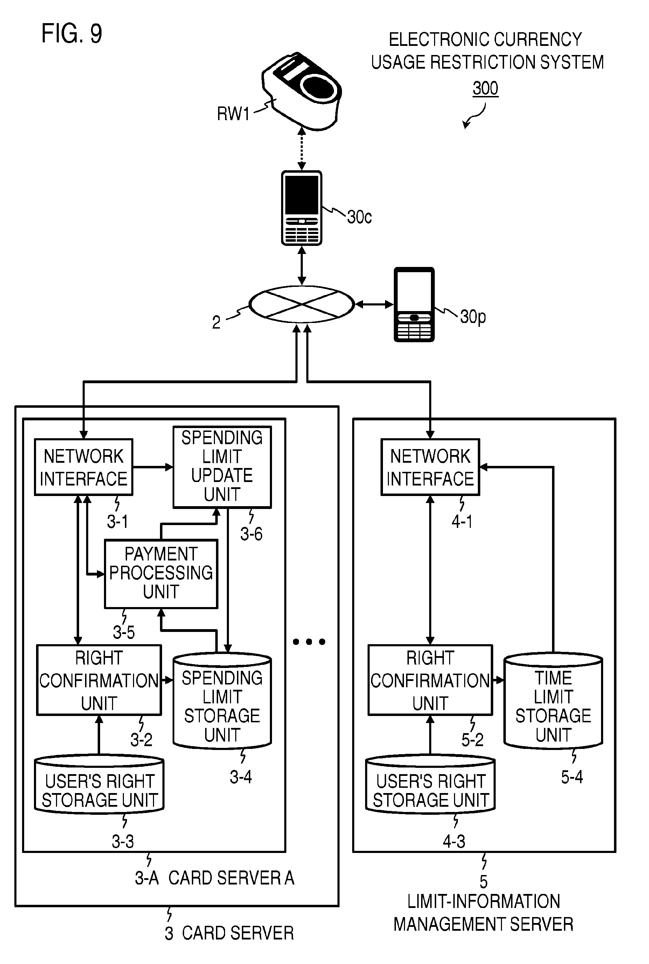

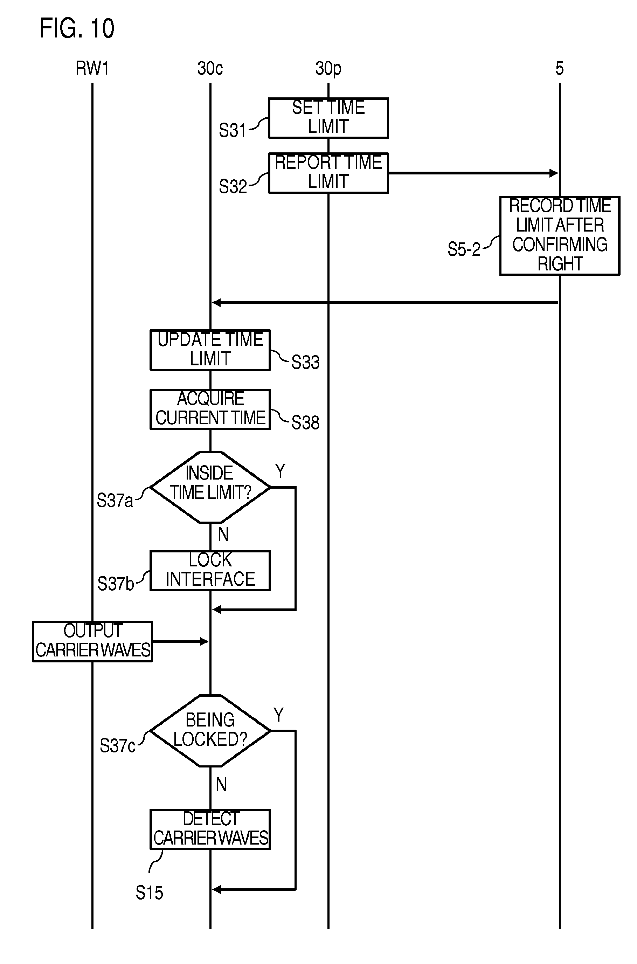

An electronic currency usage restriction system 300 in a third embodiment, which differs from the electronic currency usage restriction system 100 in the first embodiment in that a function to specify a time period in which the use of electronic currency is permitted is added, will be described next in detail with reference to Figs. 8, 9, and 10. Fig. 8 is a block diagram showing the configuration of a portable terminal 30 in an electronic currency usage restriction system 300 in this embodiment. Fig. 9 is a block diagram showing the configurations of servers in the electronic currency usage restriction system 300 in this embodiment. Fig. 10 is a sequence diagram illustrating the operation of the electronic currency usage restriction system 300 in this embodiment.

As shown in Fig. 8, the portable terminal 30 included in the electronic currency usage restriction system 300 in this embodiment includes a spending limit setting unit 11, a network interface 12, a spending limit update unit 13, a spending limit storage unit 14, a near field communication interface 15, a secure element unit 16, a lock unit 37, a time limit setting unit 31, a time limit update unit 33, a time limit storage unit 34, and a clock circuit unit 38. The portable terminal 30 in this embodiment differs from the portable terminal 10 in the first embodiment in that the portable terminal 30 in this embodiment includes the lock unit 37 instead of the lock unit 17 included in the portable terminal 10 in the first embodiment and includes the time limit setting unit 31, the time limit update unit 33, the time limit storage unit 34, and the clock circuit unit 38, which are not included in the portable terminal 10 in the first embodiment.

As shown in Fig. 9, the card server 3 included in the electronic currency usage restriction system 300 in this embodiment includes a plurality of card servers, a card server A to a card server Z, each including a network interface 3-1, a right confirmation unit 3-2, a user's right storage unit 3-3, a spending limit storage unit 3-4, a payment processing unit 3-5, and a spending limit update unit 3-6, the configuration being the same as in the card server 3 in the first embodiment shown in Fig. 3. The electronic currency usage restriction system 300 in this embodiment includes a limit-information management server 5, which is not included in the electronic currency usage restriction system 100 in the first embodiment. The limit-information management server 5 included in the electronic currency usage restriction system 300 in this embodiment includes a network interface 4-1, a right confirmation unit 5-2, a user's right storage unit 4-3, and a time limit storage unit 5-4. Just one limit-information management server 5 will be enough, and one of the plurality of card servers included in the card server 3 may serve concurrently as the limit-information management server 5. The difference from the first embodiment will be described next. Since components denoted by the same reference numerals perform the same operations as in the first embodiment, a description of those components will be omitted.

As described earlier, in the case described below, a pair of portable terminals 30 are provided; the users of the two portable terminals are in a parent-child relationship; and controls on the spending of electronic money are set from the portable terminal 30p owned by the parent on the portable terminal 30c owned by the child. In the case described in this embodiment, the parent user restricts the amount of electronic money the child user can spend by specifying a spending limit on the portable terminal 30c, as in the first embodiment, and also restricts the time period in which the child user can spend electronic money by specifying a time period in which electronic currency can be used (time limit) on the portable terminal 30c.

The spending limit is set in the same process as described in the first embodiment, and a description thereof will be omitted. The setting of the time limit will be described next. The parent user operates the portable terminal 30p and inputs a time period in which the child user can use electronic money (time limit) into the portable terminal 30p. The parent can input the time limit by using a special application installed beforehand on the portable terminal 30p or by sending e-mail to a specified address. The time limit can be set as 7:00 to 17:00, for example. The information of the time period may be set by entering a sequence of numbers. The time limit setting unit 31 in the portable terminal 30p generates time limit setting information indicating the time limit (such as "12:00 to 18:00" or, if a sequence of numbers is input, "12001800") in accordance with the user input from the parent user (S31). When the time limit setting information is generated, the network interface 12 of the portable terminal 30p sends the generated time limit setting information to the limit-information management server 5 (S32).

The network interface 4-1 of the limit-information management server 5 receives the time limit setting information. When the network interface 4-1 receives the time limit setting information, the right confirmation unit 5-2 of the limit-information management server 5 checks whether the portable terminal 30 which has sent the time limit setting information has the right to set the time limit and, if the portable terminal 30 which has sent the time limit setting information has such a setting right, generates time limit update information in accordance with the received time limit setting information (S5-2). The time limit setting information is stored in the time limit storage unit 5-4 of the limit-information management server 5. If the limit-information management server 5 recognizes that the portable terminal 30p has such a right, the network interface 4-1 of the limit-information management server 5 sends the time limit update information generated by the right confirmation unit 5-2 to the target portable terminal 30c.

The network interface 12 of the portable terminal 30c receives the time limit update information generated by the limit-information management server 5. When the network interface 12 receives the time limit update information, the time limit update unit 33 of the portable terminal 30c updates the time limit stored in the time limit storage unit 34 in accordance with the received time limit update information (S33). With those steps, the time limit setting process finishes. A series of steps S31, S32, S5-2, and S33 may be performed before, after, or in parallel with a series of steps S11, S12, S3-3, and S13a in Fig. 4.

The determination of whether the child user has spent electronic money within the time limit will be described next. The clock circuit unit 38 of the portable terminal 30c acquires the current time (S38). The lock unit 37 compares the acquired current time with the time limit stored in the time limit storage unit 34 (S37a), and if the acquired current time is determined to be outside the time limit stored in the time limit storage unit 34, locks the near field communication interface 15 (37b) and prevents payments by electronic money. If the acquired current time is determined to be within the time limit stored in the time limit storage unit 34, the lock unit 37 is not activated. Like the lock unit 17 in the first embodiment, the lock unit 37 may also have a function to lock the near field communication interface 15 when the balance stored in the spending limit storage unit 14 becomes 0.

The description of the scene in which the child user uses electronic money after the parent user specifies the time limit will continue. When the child user wants to make a payment by using his or her own portable terminal 30c, the user makes the chip of his or her own portable terminal 30c approach the reader/writer RW1 provided for a shop or the like. The reader/writer RW1 outputs carrier waves. The near field communication interface 15 of the portable terminal 30c checks whether it is locked by the lock unit 37 (S37c): If locked, it cannot work; if it is not locked by the lock unit 37, the near field communication interface 15 of the portable terminal 30c detects the carrier waves output from the reader/writer RW1 (S15). The steps after the carrier waves are detected in step S15 are the same as step S15 and subsequent steps in the first embodiment, and a description of those steps will be omitted.

As described above, in addition to the same advantages as the first embodiment, the electronic currency usage restriction system 300 in this embodiment can restrict the use of electronic money from a portable terminal 30 on which the time limit is set when the portable terminal 30 is outside the time limit, by storing information on the time limit to be shared through the limit-information management server 5 in the time limit storage unit 34 of the portable terminal 30, having the clock circuit unit 38 compare the information with the current time, and having the lock unit 37 lock the near field communication interface 15 in accordance with the result of the comparison. Therefore, the user's spending of electronic money can be restricted appropriately.

### [Fourth Embodiment]

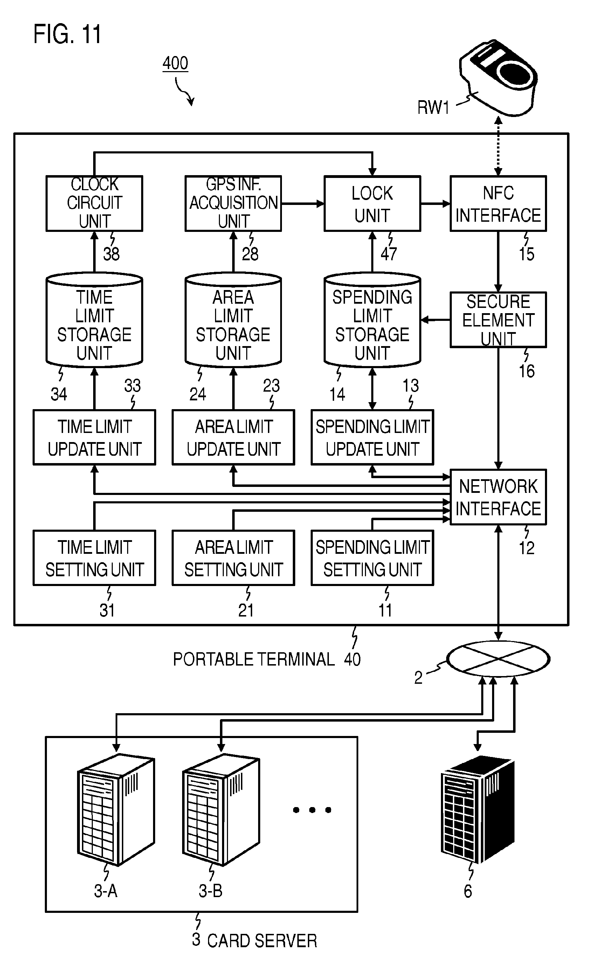

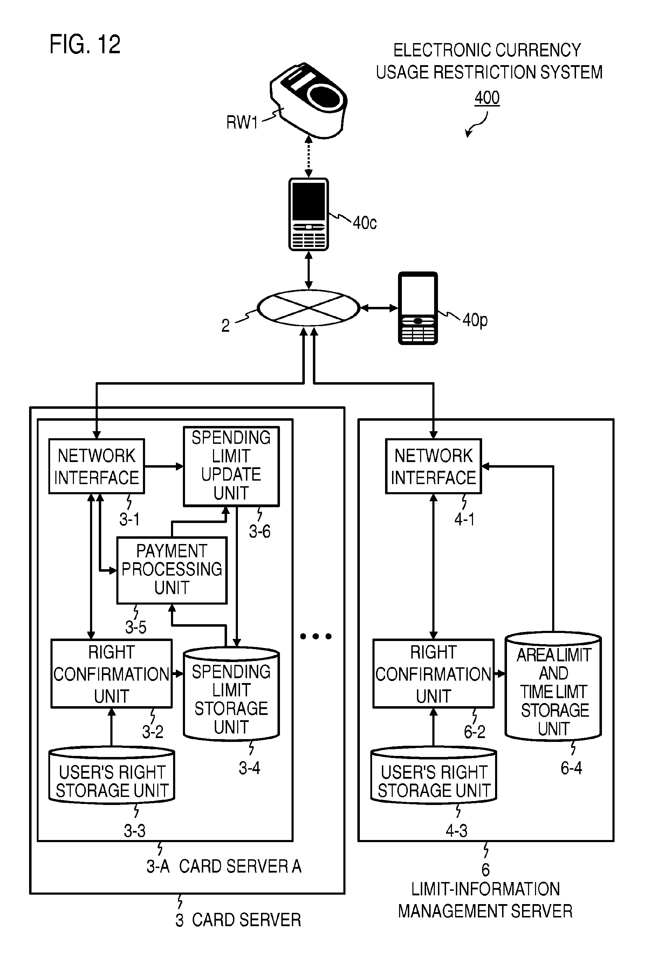

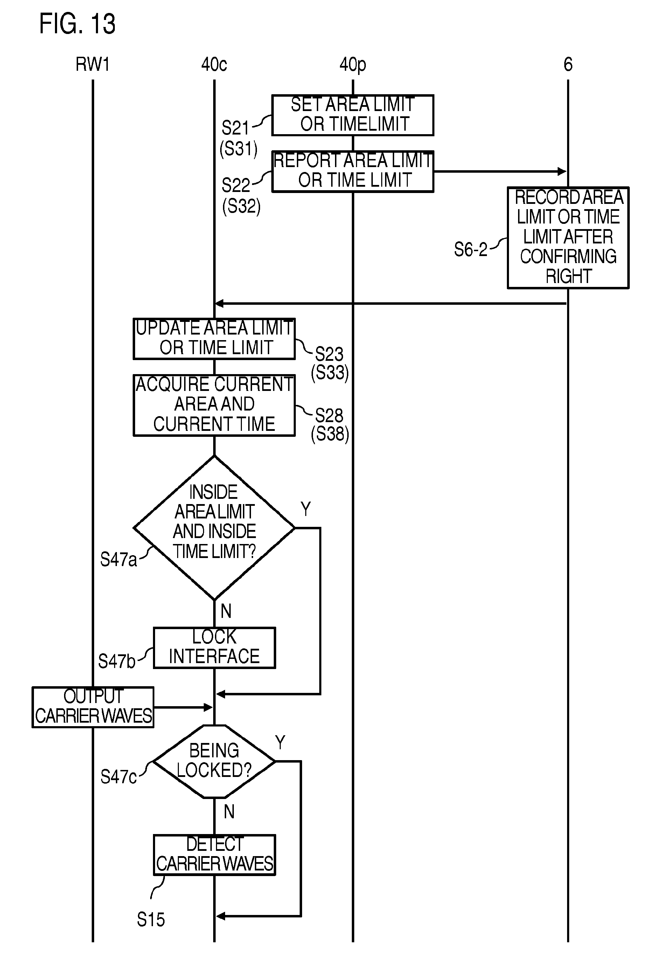

Next, an electronic currency usage restriction system 400 in a fourth embodiment, which is a combination of the electronic currency usage restriction system 200 in the second embodiment and the electronic currency usage restriction system 300 in the third embodiment, will be described in detail with reference to Figs. 11, 12, and 13. Fig. 11 is a block diagram showing the configuration of a portable terminal 40 in the electronic currency usage restriction system 400 in this embodiment. Fig. 12 is a block diagram showing the configurations of servers in the electronic currency usage restriction system 400 in this embodiment. Fig. 13 is a sequence diagram illustrating the operation of the electronic currency usage restriction system 400 in this embodiment.

As shown in Fig. 11, the portable terminal 40 included in the electronic currency usage restriction system 400 in this embodiment includes a spending limit setting unit 11, a network interface 12, a spending limit update unit 13, a spending limit storage unit 14, a near field communication interface 15, a secure element unit 16, a lock unit 47, an area limit setting unit 21, an area limit update unit 23, an area limit storage unit 24, a GPS information acquisition unit 28, a time limit setting unit 31, a time limit update unit 33, a time limit storage unit 34, and a clock circuit unit 38. The portable terminal 40 in this embodiment differs from the portable terminal 20 or 30 in the second or third embodiment in that the portable terminal 40 in this embodiment includes the lock unit 47 instead of the lock unit 27 or lock unit 37 included in the portable terminal 20 or 30 in the second or third embodiment.

As shown in Fig. 12, the card server 3 included in the electronic currency usage restriction system 400 in this embodiment is the same as the card server 3 in the first to third embodiments. A limit-information management server 6 included in the electronic currency usage restriction system 400 in this embodiment includes a network interface 4-1, a right confirmation unit 6-2, a user's right storage unit 4-3, and an area limit and time limit storage unit 6-4. The limit-information management server 6 in this embodiment differs from the limit-information management server 4 or 5 in the second or third embodiment in the following points: the limit-information management server 6 in this embodiment includes the right confirmation unit 6-2 instead of the right confirmation unit 4-2 or 5-2 included in the limit-information management server 4 or 5 in the second or third embodiment; and the limit-information management server 6 in this embodiment includes the area limit and time limit storage unit 6-4 instead of the area limit storage unit 4-4 or the time limit storage unit 5-4 included in the limit-information management server 4 or 5 in the second or third embodiment. The difference from the first, second, or third embodiment will be described next. Since components denoted by the same reference numerals perform the same operations as in the first, second, or third embodiment, a description of those components will be omitted. Steps S6-2 and S47a to S47c, which constitute the difference from the first, second, or third embodiment, will be described next.

When the network interface 4-1 receives the area limit setting information or the time limit setting information, the right confirmation unit 6-2 of the limit-information management server 6 checks whether the portable terminal 40 which has sent the area limit setting information or the time limit setting information has the right to set the area limit or the time limit and, if the portable terminal 40 which has sent the area limit setting information or the time limit setting information has such a setting right, generates area limit update information or time limit update information in accordance with the received area limit setting information or the received time limit setting information (S6-2). The lock unit 47 of the portable terminal 40c compares the current position of the portable terminal acquired by the GPS information acquisition unit 28 with the area limit stored in the area limit storage unit 24, compares the current time acquired by the clock circuit unit 38 with the time limit stored in the time limit storage unit 34 (S47a) and, if the acquired current position is determined to be outside the area limit stored in the area limit storage unit 24 or if the acquired current time is determined to be outside the time limit stored in the time limit storage unit 34, locks the near field communication interface 15 (S47b) to prevent payments by electronic money. If the acquired current position is in the area limit stored in the area limit storage unit 24 and if the acquired current time is within the time limit stored in the time limit storage unit 34, the lock unit 47 is not activated. When the child user uses his or her own portable terminal 40c to make a payment, the user makes the chip of his or her own portable terminal 40c approach the reader/writer RW1 provided for a shop or the like. The near field communication interface 15 of the portable terminal 40c checks whether the portable terminal 40c is locked by the lock unit 47 (S47c): if locked, it cannot work; if it is not locked by the lock unit 47, the near field communication interface 15 of the portable terminal 40c detects carrier waves output from the reader/writer RW1 (S15). The steps after the carrier waves are detected in step S15 are the same as step S15 and subsequent steps in the first embodiment.

As described above, in addition to has the same advantages as the first embodiment, the electronic currency usage restriction system 400 in this embodiment can prevent the use of electronic money by a portable terminal 40 on which an area limit or a time limit is set when the portable terminal 40 is outside the area limit or the time limit because the configurations of the second embodiment and the third embodiment are included. Therefore, the user's spending of electronic money can be restricted appropriately.

Each type of processing described above may be executed not only time sequentially according to the order in the description but also in parallel or individually when necessary or according to the processing capability of each apparatus that executes the processing. Appropriate changes can be made to the embodiments without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any recording medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, each apparatus is implemented by executing the predetermined program on the computer, but at least a part of the processing details may be implemented by hardware.

## Claims

1. A portable terminal that can communicate in a near field communication manner with a reader/writer which can be connected through a network to a card server which executes payment with electronic currency; that can communicate with the card server through the network; and that is used by a child user, the portable terminal comprising:
a spending limit storage unit adapted to store an upper limit of electronic currency that can be spent, hereafter called a spending limit;
a network interface adapted to receive, through the network, spending limit update information generated by the card server according to a notice from a parent user;
a spending limit update unit adapted, when the spending limit update information is received, to update the spending limit stored in the spending limit storage unit, according to the received spending limit update information;
a near field communication interface adapted to detect carrier waves output from the reader/writer; and
a secure element unit adapted to apply for purchase when the carrier waves are detected;
after the secure element unit applies for purchase, the spending limit update unit receiving, from the card server, a spending limit based on whether the card server allows payment for the applied purchase and updating the spending limit stored in the spending limit storage unit according to the received spending limit.

2. The portable terminal according to Claim 1,
wherein the portable terminal can communicate, through the network, with a server which manages limit information, hereafter called a limit-information management server; and
the portable terminal further comprises:
an area limit storage unit adapted to store information on an area where electronic currency usage is allowed, hereafter called an area limit;
an area limit update unit adapted, when the network interface receives, through the network, area limit update information generated by the limit-information management server according to a notice from the parent user, to update the stored area limit on the basis of the received area limit update information;
a GPS information acquisition unit adapted to acquire the position of the portable terminal; and
a lock unit adapted to compare the acquired position of the portable terminal with the stored area limit and to lock the operation of the near field communication interface according to a comparison result.

3. The portable terminal according to Claim 1,
wherein the portable terminal can communicate, through the network, with a server which manages limit information, hereafter called a limit-information management server; and
the portable terminal further comprises:
a time limit storage unit adapted to store information on a time period in which electronic currency usage is allowed, hereafter called a time limit;
a time limit update unit adapted, when the network interface receives, through the network, time limit update information generated by the limit-information management server according to a notice from the parent user, to update the stored time limit on the basis of the received time limit update information;
a clock circuit unit adapted to acquire the time; and
a lock unit adapted to compare the acquired time with the stored time limit and to lock the operation of the near field communication interface according to a comparison result.

4. The portable terminal according to Claim 2, further comprising:
a time limit storage unit adapted to store information on a time period in which electronic currency usage is allowed, hereafter called a time limit;
a time limit update unit adapted, when the network interface receives, through the network, time limit update information generated by the limit-information management server according to a notice from the parent user, to update the stored time limit on the basis of the received time limit update information; and
a clock circuit unit adapted to acquire the time;
wherein the lock unit compares the acquired position of the portable terminal with the stored area limit, compares the acquired time with the stored time limit, and locks the operation of the near field communication interface according to comparison results.

5. An electronic currency usage restriction system comprising:
a card server that executes payment with electronic currency;
a reader/writer that can be connected through a network to the card server;
a portable terminal that is owned by a parent user and that can be connected through the network to the card server, hereafter called a parent-user portable terminal; and
a portable terminal that is owned by a child user, that can communicate in a near field communication manner with the reader/writer, and that can be connected through the network to the card server, hereafter called a child-user portable terminal;
the parent-user portable terminal comprising:
a spending limit setting unit adapted to generate spending limit setting information indicating an upper limit of electronic currency that can be spent, hereafter called a spending limit, according to an input from the parent user; and
a network interface adapted to send the spending limit setting information to the card server;
the child-user portable terminal comprising:
a spending limit storage unit adapted to store the spending limit;
a network interface adapted to receive spending limit update information generated by the card server according to the spending limit setting information;
a spending limit update unit adapted to update the spending limit stored in the spending limit storage unit, according to the received spending limit update information;
a near field communication interface adapted to detect carrier waves output from the reader/writer; and
a secure element unit adapted to apply for purchase when the carrier waves are detected;
the card server comprising:
a spending limit storage unit adapted to store the spending limit;
a network interface adapted to receive the spending limit setting information from the parent-user portable terminal and to send the spending limit update information to the child-user portable terminal;
a right confirmation unit adapted to confirm that the parent-user portable terminal, which sent the spending limit setting information, has a right to set the spending limit, to generate the spending limit update information according to the received spending limit setting information; and to store the spending limit in the spending limit storage unit;
a spending limit update unit adapted to generate the spending limit update information according to the spending limit setting information received from the parent-user portable terminal, and to update the spending limit stored in the spending limit storage unit;
a payment processing unit adapted, when a payment request that includes a purchase amount is received from the reader/writer, to determine whether the purchase amount is smaller than or equal to the stored spending limit; and
a spending limit update unit adapted, when the payment processing unit determines that the purchase amount is smaller than or equal to the stored spending limit, to update the stored spending limit to the difference between the stored spending limit and the purchase amount, as a new spending limit, to generate spending limit update information indicating the updated spending limit or the spending limit not updated when the purchase amount is not smaller than or equal to the stored spending limit, and to send the spending limit update information to the child-user portable terminal by the use of the network interface;
the spending limit update unit of the child-user portable terminal updating the spending limit stored in the spending limit storage unit according to the spending limit based on the spending limit update information received from the card server after the purchase is applied for.

6. The electronic currency usage restriction system according to Claim 5, further comprising a server that is connected to the network and that manages limit information, hereafter called a limit-information management server;
wherein the parent-user portable terminal further comprises an area limit setting unit adapted to generate area limit setting information indicating information on an area where electronic currency usage is allowed, hereafter called an area limit, according to an input from the parent user and to send the area limit setting information to the limit-information management server from the network interface;
the child-user portable terminal further comprises:
an area limit storage unit adapted to store the area limit;
an area limit update unit adapted, when area limit update information is received, to update the stored area limit on the basis of the received area limit update information;
a GPS information acquisition unit adapted to acquire the position of the portable terminal; and
a lock unit adapted to compare the acquired position of the portable terminal with the stored area limit and to lock the operation of the near field communication interface according to a comparison result; and
the limit-information management server comprises:
an area limit storage unit adapted to store the area limit;
a network interface adapted to receive the area limit setting information from the parent-user portable terminal and to send the area limit update information to the child-user portable terminal; and
a right confirmation unit adapted, when the area limit setting information is received from the parent-user portable terminal, to check whether the parent-user portable terminal has a right to set the area limit, to generate the area limit update information according to the received area limit setting information and to send the area limit update information to the child-user portable terminal when the parent-user portable terminal has a right to set the area limit, and to store the area limit specified in the area limit update information in the area limit storage unit.

7. The electronic currency usage restriction system according to Claim 5, further comprising a server that is connected to the network and that manages limit information, hereafter called a limit-information management server;
wherein the parent-user portable terminal further comprises a time limit setting unit adapted to generate time limit setting information indicating information on a time period in which electronic currency usage is allowed, hereafter called a time limit, according to an input from the parent user and to send the time limit setting information to the limit-information management server from the network interface;
the child-user portable terminal further comprises:
a time limit storage unit adapted to store the time limit;
a time limit update unit adapted, when time limit update information is received, to update the stored time limit on the basis of the received time limit update information;
a clock circuit unit adapted to acquire the time; and
a lock unit adapted to compare the acquired time with the stored time limit and to lock the operation of the near field communication interface according to a comparison result; and
the limit-information management server comprises:
a time limit storage unit adapted to store the time limit;
a network interface adapted to receive the time limit setting information from the parent-user portable terminal and to send the time limit update information to the child-user portable terminal; and
a right confirmation unit adapted, when the time limit setting information is received from the parent-user portable terminal, to check whether the parent-user portable terminal has a right to set the time limit, to generate the time limit update information according to the received time limit setting information and to send the time limit update information to the child-user portable terminal when the parent-user portable terminal has a right to set the time limit, and to store the time limit specified in the time limit update information in the time limit storage unit.

8. The electronic currency usage restriction system according to Claim 5, further comprising a server that is connected to the network and that manages limit information, hereafter called a limit-information management server;
wherein the parent-user portable terminal further comprises:
an area limit setting unit adapted to generate area limit setting information indicating information on an area where electronic currency usage is allowed, hereafter called an area limit, according to an input from the parent user and to send the area limit setting information to the limit-information management server from the network interface; and
a time limit setting unit adapted to generate time limit setting information indicating information on a time period in which electronic currency usage is allowed, hereafter called a time limit, according to an input from the parent user and to send the time limit setting information to the limit-information management server from the network interface;
the child-user portable terminal further comprises:
an area limit storage unit adapted to store the area limit;
a time limit storage unit adapted to store the time limit;
an area limit update unit adapted, when area limit update information is received, to update the stored area limit on the basis of the received area limit update information;
a time limit update unit adapted, when time limit update information is received, to update the stored time limit on the basis of the received time limit update information;
a GPS information acquisition unit adapted to acquire the position of the portable terminal;
a clock circuit unit adapted to acquire the time; and
a lock unit adapted to compare the acquired position of the portable terminal with the stored area limit and lock the operation of the near field communication interface according to a comparison result, and to compare the acquired time with the stored time limit and lock the operation of the near field communication interface according to a comparison result; and
the limit-information management server comprises:
an area limit storage unit adapted to store the area limit;
a time limit storage unit adapted to store the time limit;
a network interface adapted to receive the area limit setting information and the time limit setting information from the parent-user portable terminal and to send the area limit update information and the time limit update information to the child-user portable terminal; and
a right confirmation unit adapted, when the area limit setting information is received from the parent-user portable terminal, to check whether the parent-user portable terminal has a right to set the area limit, to generate the area limit update information according to the received area limit setting information and to send the area limit update information to the child-user portable terminal when the parent-user portable terminal has a right to set the area limit, and to store the area limit specified in the area limit update information in the area limit storage unit; and, when the time limit setting information is received from the parent-user portable terminal, to check whether the parent-user portable terminal has a right to set the time limit, to generate the time limit update information according to the received time limit setting information and to send the time limit update information to the child-user portable terminal when the parent-user portable terminal has a right to set the time limit, and to store the time limit specified in the time limit update information in the time limit storage unit.

9. A recording medium having recorded thereon a program for causing a portable terminal to function as the portable terminal according to one of Claims 1 to 4.
